# FASCICULE DE BREVET EUROPEEN

(11) **EP 1 978 850 B1**
(45) Date de publication et mention de la délivrance du brevet: **30.12.2009**
(21) Numéro de dépôt: 07730906.0
(22) Date de dépôt: 01.02.2007
(51) Int. Cl.: A47J 27/05

(54) **ACCESSOIRE DE CUISSON DESTINE A UN DISPOSITIF DE CUISSON A LA VAPEUR**
GARZUBEHÖR FÜR EIN DAMPFKOCHGERÄT
COOKING ACCESSORY FOR A STEAM COOKING DEVICE

(30) Priorité: 03.02.2006 FR 0600996
(43) Date de publication de la demande: 15.10.2008
(73) Titulaire: SEB S.A., 69130 Ecully (FR)
(72) Inventeur: DUMOUX, Philippe, F-21120 Gemeaux (FR); PRETRE, Nicolas, F-21000 Dijon (FR)
(74) Mandataire: Kiehl, Hubert
(86) Numéro de dépôt international: PCT/FR2007/000190
(87) Numéro de publication internationale: WO 2007/088282

(56) Documents cités:
- FR-A- 2 846 217
- US-A- 3 528 401
- US-B1- 6 546 849
- US-B1- 6 840 159

## Description

La présente invention concerne le domaine technique des accessoires de cuisson. La présente invention concerne notamment, mais non exclusivement, un accessoire de cuisson destiné à un dispositif de cuisson à la vapeur.

Il est connu du document US 3 528 401 un accessoire de cuisson destiné à être utilisé dans un dispositif de cuisson à la vapeur, cet accessoire de cuisson comprenant un réceptacle de cuisson et une zone de passage de vapeur. Cet accessoire de cuisson permet de cuire des aliments dans leur jus dans le réceptacle de cuisson. Ce document n'envisage pas d'autre type de cuisson avec le même accessoire.

Le but de la présente invention est de proposer un accessoire de cuisson permettant de cuire les aliments dans leur jus ou en dehors de leur jus.

Un autre but de l'invention est de réaliser un accessoire de cuisson supprimant les écoulements de jus sur des éléments inférieurs disposés sous ledit accessoire de cuisson, notamment lorsque ces éléments inférieurs contiennent des aliments.

Un autre but de l'invention est de réaliser de manière économique un accessoire de cuisson destiné à un dispositif de cuisson à la vapeur.

Un autre but de l'invention est de proposer un dispositif de cuisson à la vapeur prévu pour recevoir un accessoire de cuisson du type précité.

Ces buts sont atteints avec un accessoire de cuisson, notamment destiné à être utilisé dans un dispositif de cuisson à la vapeur, ledit accessoire de cuisson comprenant un réceptacle de cuisson et une zone de passage de vapeur, du fait que l'accessoire de cuisson est réversible, et que l'accessoire de cuisson présente en position retournée une zone de cuisson adjacente à une zone de récupération de jus, la zone de cuisson et la zone de récupération de jus étant dépourvues de passage d'écoulement traversant.

Lorsqu'il est utilisé dans un dispositif de cuisson à la vapeur, un tel accessoire de cuisson permet de cuire des aliments dans leur jus en plaçant les aliments dans le réceptacle de cuisson occupant la face supérieure de l'accessoire de cuisson. Les jus sont alors retenus au niveau du réceptacle de cuisson. Un tel accessoire de cuisson retourné permet de cuire les aliments en dehors de leur jus, sur la zone de cuisson occupant alors là face supérieure de l'accessoire de cuisson. Les jus peuvent s'écouler de la zone de cuisson vers la zone de récupération de jus du fait du caractère adjacent.

Dans les deux modes de cuisson précités, la cuisson des aliments s'effectue en partie par la vapeur traversant une ou des perforations de la zone de passage de vapeur.

La réversibilité de l'accessoire de cuisson permet donc de cuire des aliments selon deux modes de cuisson avec un seul accessoire, la cuisson dans le jus et la cuisson hors jus.

Lors de la cuisson hors jus, les jus sont récupérés par la zone de récupération de jus dépourvue de passage d'écoulement traversant, c'est-à-dire dépourvue de passage permettant de passer d'une face à l'autre de l'accessoire de cuisson.

La zone de récupération de jus a pour fonction de retenir les jus de manière à supprimer les écoulements de jus sur des éléments inférieurs. Ainsi, lors de cuissons simultanées, les goûts ne se mélangent pas et chaque plat présente une saveur optimale.

Un tel accessoire de cuisson présente une architecture simple réalisable de manière économique.

De préférence, une nervure sépare le réceptacle de cuisson et la zone de passage de vapeur.

Lorsque les aliments sont placés dans le réceptacle de cuisson, la nervure retient les jus dans le réceptacle de cuisson.

Avantageusement, la nervure est annulaire.

Cette construction s'avère avantageuse pour retenir les jus dans le réceptacle de cuisson.

De préférence, la nervure annulaire entoure le réceptacle de cuisson.

Ainsi, lorsque les aliments sont placés dans le réceptacle de cuisson, les jus sont retenus dans le réceptacle de cuisson par une nervure limitant toute la périphérie du réceptacle de cuisson.

Selon un mode de réalisation avantageux, la nervure retournée forme une gorge ménageant la zone de récupération de jus.

Cette géométrie de la nervure permet de simplifier la réalisation de l'accessoire de cuisson.

De préférence, le réceptacle de cuisson et la zone de cuisson présentent une forme allongée

Un tel accessoire de cuisson est particulièrement adapté à la cuisson d'aliments allongés tels que notamment les poissons.

Avantageusement, la zone de cuisson est inclinée vers la zone de récupération des jus.

Cette géométrie de la zone de cuisson, sur laquelle sont placés les aliments lors de la cuisson hors jus, facilite l'écoulement des jus vers la zone de récupération de jus.

De préférence, une pièce métallique forme le réceptacle de cuisson, la zone de cuisson et la zone de récupération de jus.

La constitution de cette pièce en un matériau métallique permet d'optimiser l'échange thermique avec les aliments. Ainsi les aliments sont cuits par la vapeur passant au travers de la zone de passage de vapeur et par la conduction thermique au niveau du réceptacle de cuisson dans le cas de la cuisson dans le jus, ou au niveau de la zone de cuisson dans le cas de la cuisson hors jus.

Avantageusement, la pièce métallique présente la zone de passage de vapeur.

Cette construction permet de limiter la largeur nécessaire pour loger des perforations de la zone de passage de vapeur, et ainsi de maximiser la surface de la zone de cuisson et du réceptacle de cuisson.

Avantageusement, la pièce métallique est revêtue d'un matériau anti-adhésif.

Ainsi, les aliments n'adhèrent pas au réceptacle de cuisson, dans le cas de la cuisson dans le jus, ni à la zone de cuisson, dans le cas de la cuisson hors jus.

Avantageusement, l'accessoire de cuisson comprend une couronne périphérique obtenue par surmoulage de matière plastique sur la pièce métallique.

Le surmoulage plastique permet de limiter la température de la couronne périphérique et facilite ainsi la préhension de l'accessoire de cuisson. Le surmoulage plastique permet également de simplifier la construction de l'accessoire de cuisson.

Selon une autre caractéristique de l'accessoire de cuisson, l'accessoire de cuisson comprend une couronne périphérique.

Cette construction s'avère avantageuse pour l'assemblage de l'accessoire de cuisson au sein d'un dispositif de cuisson à la vapeur et pour la réalisation d'une liaison étanche.

Selon une forme de réalisation avantageuse, la couronne périphérique porte des organes de préhension.

Les organes de préhension facilitent la manipulation de l'accessoire de cuisson.

De préférence, la couronne périphérique comporte deux bords annulaires symétriques.

La symétrie des bords annulaires inférieur et supérieur permet de positionner l'accessoire de cuisson au niveau d'une zone de réception similaire que l'accessoire de cuisson soit retourné ou pas. Cette symétrie simplifie la réversibilité de l'accessoire.

Avantageusement, un dispositif de cuisson à la vapeur comportant un accessoire de cuisson du type précité comporte un élément inférieur sur lequel est disposé l'accessoire de cuisson et un élément supérieur disposé sur l'accessoire de cuisson, l'élément inférieur comportant un bord annulaire formant une rainure prévue pour recevoir soit l'élément supérieur soit l'accessoire de cuisson dans l'une et l'autre de ses positions.

Ainsi une seule rainure permet de recevoir l'accessoire de cuisson selon ses deux positions et alternativement de recevoir directement l'élément supérieur ou l'élément inférieur dans un cas d'utilisation du dispositif de cuisson à la vapeur sans l'accessoire de cuisson.

De préférence, un dispositif de cuisson à la vapeur comportant un accessoire de cuisson du type précité comporte un élément inférieur sur lequel est disposé l'accessoire de cuisson et un élément supérieur disposé sur l'accessoire de cuisson, l'élément inférieur comportant un bord annulaire formant une rainure prévue pour recevoir soit l'élément supérieur soit l'accessoire de cuisson dans l'une et l'autre de ses positions, les bords annulaires de l'accessoire de cuisson étant prévus pour coopérer avec une surface d'appui annulaire de l'élément supérieur ainsi qu'avec une surface d'appui annulaire de l'élément inférieur.

Cette géométrie permet d'optimiser l'étanchéité des liaisons entre l'accessoire de cuisson et les éléments inférieur et supérieur.

On comprendra mieux les buts, aspects et avantages de la présente invention, d'après la description donnée ci-après de deux modes particuliers de réalisation de l'invention présentés à titre d'exemples non limitatifs, en se référant aux dessins annexés dans lesquels :
- la figure 1 est une vue en perspective d'un premier exemple de réalisation d'un dispositif de cuisson à la vapeur recevant un accessoire de cuisson selon l'invention;
- la figure 2 est une vue en perspective de l'accessoire de cuisson du dispositif de cuisson à la vapeur montré à la figure 1, dans la position de cuisson dans le jus,
- la figure 3 est une autre vue en perspective de l'accessoire de cuisson du dispositif de cuisson à la vapeur montré à la figure 1, dans la position de cuisson hors jus;
- la figure 4 est une vue en perspective d'une parte de l'accessoire de cuisson illustré aux figures 1, 2 et 3, la couronne périphérique de l'accessoire de cuisson n'étant pas représentée;
- la figure 5 est une vue de détail d'une coupe verticale du dispositif de cuisson à la vapeur montré à la figure 1, dans lequel l'accessoire de cuisson est positionné pour cuire les aliments dans le jus;
- la figure 6 est une vue de détail d'une coupe verticale du dispositif de cuisson à la vapeur montré à la figure 1, dans lequel l'accessoire de cuisson est positionné pour cuire les aliments en dehors de leur jus;
- la figure 7 est une vue de détail d'une coupe verticale du dispositif de cuisson à la vapeur montré à la figure 1, dans lequel l'accessoire de cuisson représenté aux figures 1 à 6 est retiré;
- la figure 8 est une vue schématique d'une coupe verticale d'un second exemple de réalisation d'un dispositif de cuisson à la vapeur recevant un accessoire de cuisson selon l'invention;
- la figure 9 est une vue schématique de dessus de l'accessoire de cuisson du dispositif de cuisson à la vapeur montré à la figure 8, dans la position de cuisson hors jus.

Seuls les éléments nécessaires à la compréhension de l'invention ont été représentés. Pour faciliter la lecture des dessins, les mêmes éléments portent les mêmes références d'une figure à l'autre.

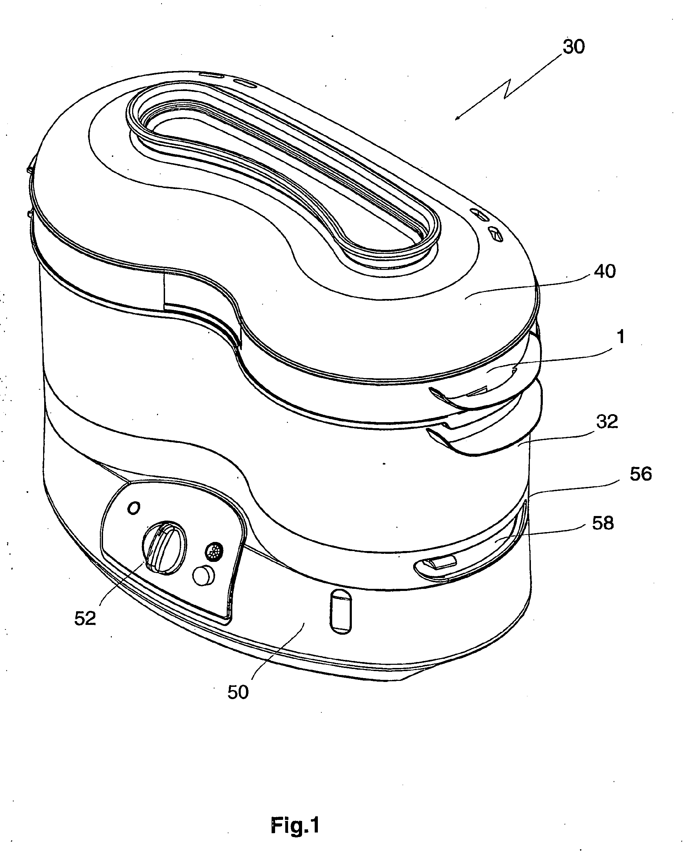

Un même exemple de réalisation est représenté sur les figures 1 à 7 se rapportant à un accessoire de cuisson 1 notamment destiné à être utilisé dans un dispositif de cuisson à la vapeur 30.

Tel que représenté à la figure 1, le dispositif de cuisson à la vapeur 30 comprend une base 50 surmontée d'un bac de récupération des jus 56. La base 50 forme un réservoir d'eau et comporte un élément chauffant plan (non visible aux figures) ainsi qu'un organe de commande 52. Le bac de récupération des jus 56 comporte un tiroir de remplissage latéral 58 communiquant avec le réservoir d'eau.

Le dispositif de cuisson à la vapeur 30 comporte également un accessoire de cuisson 1, un élément inférieur 32 sur lequel est disposé l'accessoire de cuisson 1 et un élément supérieur 40 disposé sur l'accessoire de cuisson 1.

Plus particulièrement, l'élément inférieur 32 est un bol de cuisson à fond perforé définissant une enceinte de cuisson. L'élément supérieur 40 est un couvercle.

Tel que représenté aux figures 1, 2, 3, et 4, l'accessoire de cuisson 1, notamment destiné à être utilisé dans le dispositif de cuisson à la vapeur 30, comprend un réceptacle de cuisson 2 et une zone de passage de vapeur 6. La zone de passage de vapeur 6 forme une conformation périphérique.

La zone de passage de vapeur 6 est munie de perforations 8 destinées au passage de la vapeur contribuant à la cuisson des aliments. Plus particulièrement, la zone de passage de vapeur 6 est munie de plusieurs perforations 8 réparties uniformément.

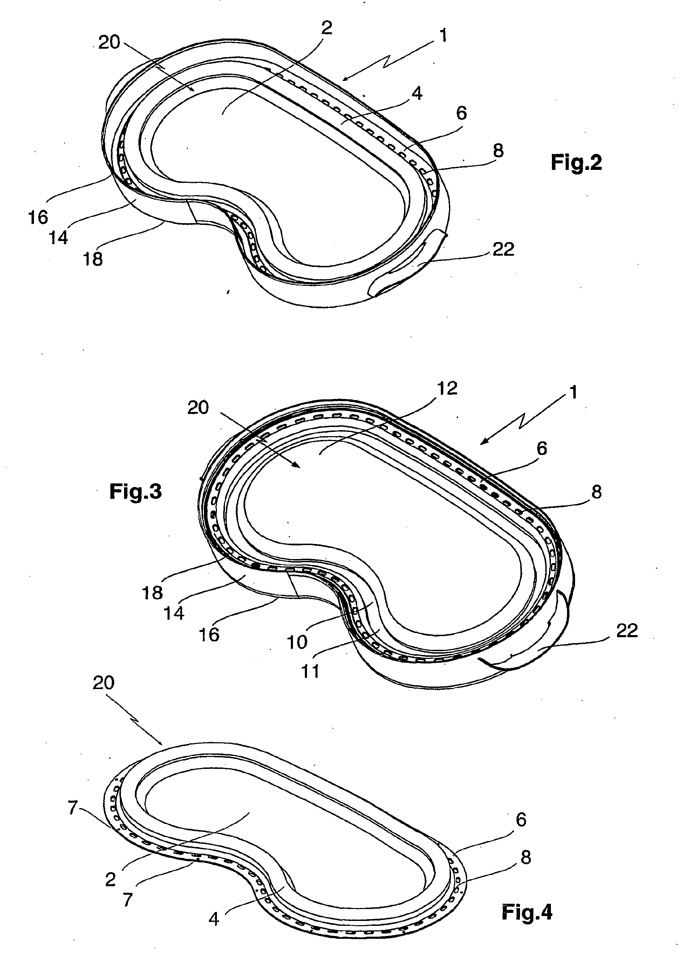

Une nervure 4 sépare le réceptacle de cuisson 2 et la zone de passage de vapeur 6. La nervure 4 est proéminente par rapport au réceptacle de cuisson 2. L'accessoire de cuisson 1 permet ainsi de cuire des aliments dans leur jus en plaçant lesdits aliments dans le réceptacle de cuisson 2. Dans ce mode de cuisson dans le jus, correspondant à la figure 2, les jus sont retenus par la nervure 4 au niveau du réceptacle de cuisson 2. La retombée des jus de cuisson dans un élément inférieur disposé sous l'accessoire de cuisson 1 est ainsi évitée. Plus particulièrement, la nervure 4 est annulaire. La nervure 4 entoure le réceptacle de cuisson 2.

Particulièrement selon l'invention, l'accessoire de cuisson 1 est réversible.

Pour une cuisson en dehors du jus, appelée aussi cuisson hors jus, représentée à la figure 3, l'accessoire de cuisson 1 est retourné par rapport à la position de cuisson dans le jus, représentée à la figure 2.

L'accessoire de cuisson 1 en position retournée présente une zone de cuisson 12 adjacente à une zone de récupération de jus 10, la zone de cuisson 12 et la zone de récupération de jus 10 étant dépourvues de passage d'écoulement traversant. Les aliments sont placés au niveau de la zone de cuisson 12 qui est proéminente par rapport à la zone de récupération de jus 10. La zone de récupération de jus 10 retient les jus et permet d'éviter que des jus coulent sur un élément inférieur disposé sous l'accessoire de cuisson 1. La zone de cuisson 12 est inclinée vers la zone de récupération des jus 10 pour faciliter l'écoulement des jus vers la zone de récupération de jus 10.

La nervure 4 retournée forme une gorge 11 ménageant la zone de récupération de jus 10. Plus particulièrement, la nervure 4 retournée forme une gorge 11 de forme annulaire ménageant la zone de récupération de jus 10 agencée en périphérie de la zone de cuisson 12.

Le réceptacle de cuisson 2 et la zone de cuisson 12 présentent une forme allongée.

L'accessoire de cuisson 1 comprend une couronne périphérique 14, plus particulièrement visible aux figures 2, 3, 5, et 6. La couronne périphérique 14 entoure la zone de passage de vapeur 6.

La couronne périphérique 14 comporte deux bords annulaires 16 et 18 symétriques. Les bords annulaires 16, 18 forment alternativement des bords inférieur et supérieur, et vice versa selon la position de l'accessoire de cuisson 1. Plus particulièrement, la couronne périphérique 14 comporte un bord annulaire 16 du côté du réceptacle de cuisson 2, et un bord annulaire 18 du côté de la zone de cuisson 12.

La couronne périphérique 14 porte des organes de préhension 22. Les organes de préhension 22 sont constitués de poignées de préhension placées de façon symétrique par rapport à l'accessoire de cuisson 1 de manière à faciliter la manipulation de l'accessoire de cuisson 1 dans ses deux positions. Les organes de préhension 22 sont placés à l'extérieur des enceintes de cuisson définies par l'élément inférieur 32 et l'accessoire de cuisson 1 ou par l'accessoire de cuisson 1 et l'élément supérieur 40.

Une pièce métallique 20 forme le réceptacle de cuisson 2, la zone de cuisson 12 et la zone de récupération de jus 10. Plus particulièrement, la pièce métallique 20 forme le réceptacle de cuisson 2, la zone de cuisson 12, la zone de récupération de jus 10, la nervure annulaire 4 et la zone de passage de vapeur 6 munie des perforations 8. La pièce métallique 20 est représentée à la figure 4.

Le matériau métallique constituant la pièce métallique 20 permet d'optimiser l'échange thermique entre les aliments et le réceptacle de cuisson 2, dans le cas de la cuisson dans le jus, et entre les aliments et la zone de cuisson 12, dans le cas de la cuisson en dehors du jus, afin de réaliser partiellement la cuisson des aliments par conduction.

Plus particulièrement, la pièce métallique 20 est réalisée en aluminium. A titre de variante, la pièce métallique 20 peut notamment être réalisée en acier inoxydable.

La pièce métallique 20 est revêtue d'un matériau anti-adhésif. Plus particulièrement, la pièce métallique est revêtue de PTFE.

La couronne périphérique 14 est avantageusement obtenue par surmoulage de matière plastique sur la pièce métallique 20. Plus particulièrement, la matière plastique est du polypropylène. La zone de passage de vapeur 6 présente des orifices 7 permettant l'ancrage du surmoulage plastique. Les orifices 7 sont représentés à la figure 4.

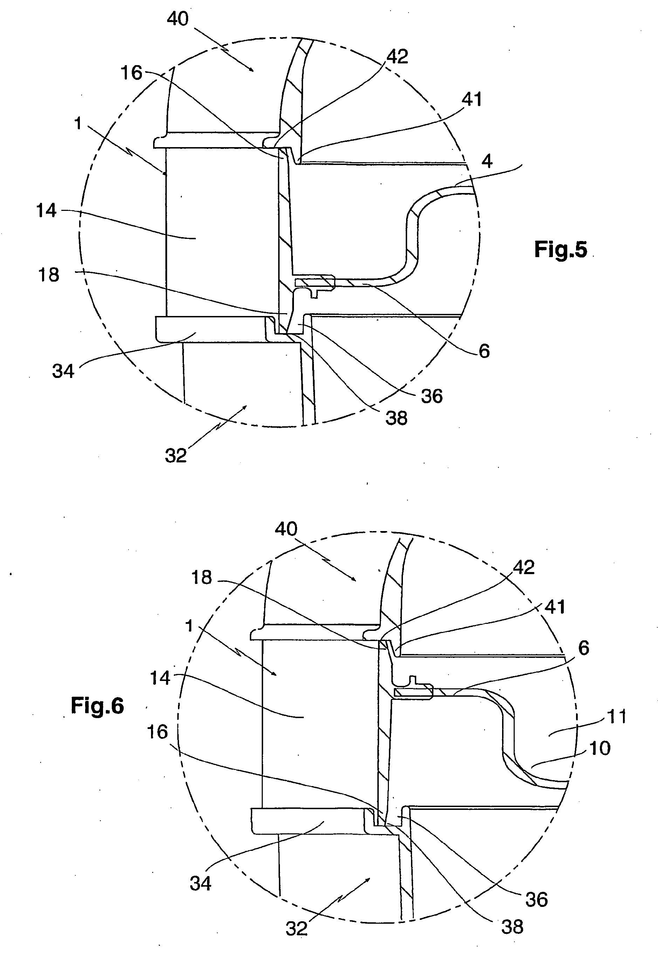

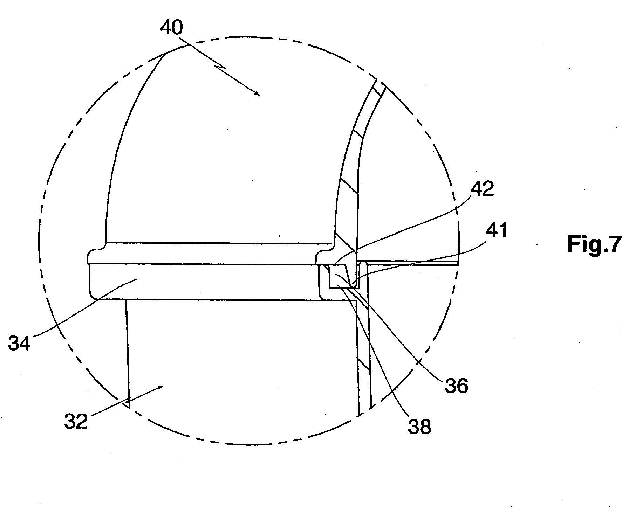

Les figures 5, 6, 7 représentent des vues de détail de coupes verticales du dispositif de cuisson à la vapeur 30 montré à la figure 1. A la figure 5, l'accessoire de cuisson 1 est placé dans le sens destiné à la cuisson dans le jus. A la figure 6, l'accessoire de cuisson 1 est placé dans le sens destiné à la cuisson en dehors du jus. A la figure 7, l'accessoire de cuisson 1 n'est pas présent dans le dispositif de cuisson à la vapeur 30.

L'élément inférieur 32 comporte un bord annulaire 34 formant une rainure 36 prévue pour recevoir soit l'élément supérieur 40 soit l'accessoire de cuisson 1 dans l'une ou l'autre de ses positions. Ainsi l'élément supérieur 40 et l'accessoire de cuisson 1 peuvent être disposés alternativement sur l'élément inférieur 32.

Tel que représenté à la figure 7, la rainure 36 peut recevoir directement l'élément supérieur 40. La rainure 36 peut recevoir un bord annulaire 41 de l'élément supérieur 40.

Tel que représenté à la figure 5, la rainure 36 peut recevoir l'accessoire de cuisson 1 dans la position de cuisson dans le jus. La rainure 36 peut recevoir le bord annulaire 18 de l'accessoire de cuisson 1.

Tel que représenté à la figure 6, la rainure 36 peut recevoir l'accessoire de cuisson 1 dans la position de cuisson, hors jus. La rainure 36 peut recevoir le bord annulaire 16 de l'accessoire de cuisson 1.

Les bords annulaires 16, 18 de l'accessoire de cuisson 1 sont prévus pour coopérer avec une surface d'appui annulaire 42 de l'élément supérieur 40 ainsi qu'avec une surface d'appui annulaire 38 de l'élément inférieur 32.

Tel que représenté à la figure 5, le bord annulaire 16 de l'accessoire de cuisson 1 coopère avec la surface d'appui annulaire 42 de l'élément supérieur 40. Le bord annulaire 18 de l'accessoire de cuisson 1 coopère avec la surface d'appui annulaire 38 de l'élément inférieur 32. La rainure 36 comporte la surface d'appui annulaire 38.

Tel que représenté à la figure 6, le bord annulaire 18 de l'accessoire de cuisson 1 coopère avec la surface d'appui annulaire 42 de l'élément supérieur 40. Le bord annulaire 16 de l'accessoire de cuisson 1 coopère avec la surface d'appui annulaire 38 de l'élément inférieur 32.

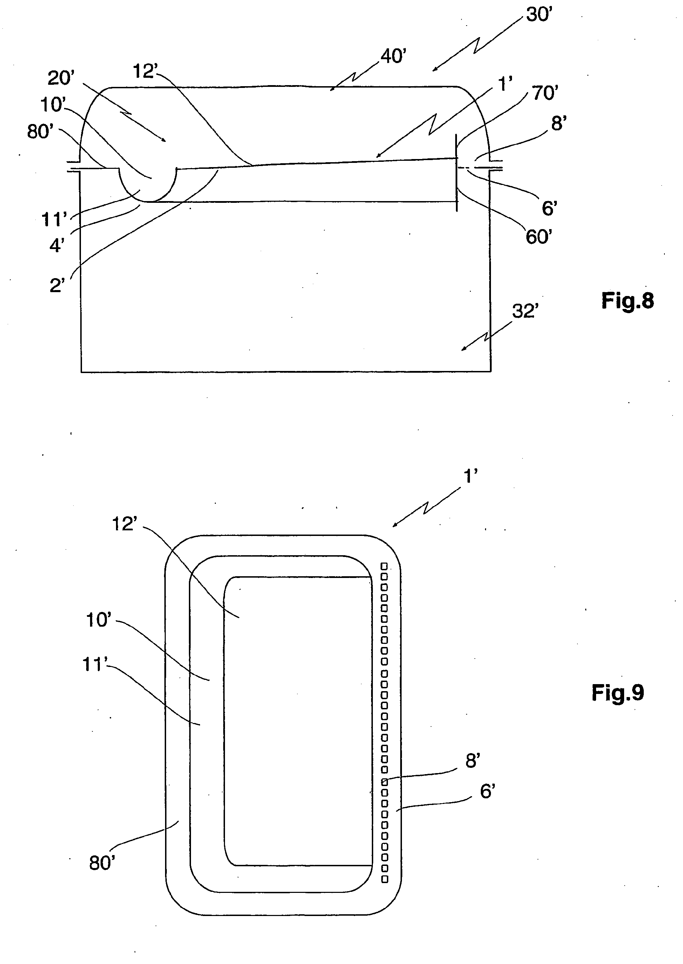

Un autre exemple de réalisation représenté sur les figures 8 à 9 se rapporte à un accessoire de cuisson 1' notamment destiné à être utilisé dans un dispositif de cuisson à la vapeur 30'.

Tel que représenté à la figure 8, le dispositif de cuisson à la vapeur 30' comporte un accessoire de cuisson 1', un élément inférieur 32' sur lequel est disposé l'accessoire de cuisson 1' et un élément supérieur 40' disposé sur l'accessoire de cuisson 1'. Plus particulièrement, l'élément inférieur 32' est un réservoir d'eau. L'élément supérieur 40' est un couvercle.

Tel que représenté aux figures 8 et 9, l'accessoire de cuisson 1' comprend un réceptacle de cuisson 2' et une zone de passage de vapeur 6', munie de perforations 8'.

Une paroi 60' sépare la zone de passage de vapeur 6' du réceptacle de cuisson 2'. Le réceptacle de cuisson 2' est délimité par la paroi 60' et par la nervure 4'. L'accessoire de cuisson 1' présente un bord périphérique 80' s'étendant autour de la paroi 60' et de la nervure 4'.

L'accessoire de cuisson 1' permet ainsi de cuire des aliments dans leur jus en les plaçant dans le réceptacle de cuisson 2'. Dans ce mode de cuisson, les jus sont retenus par la nervure 4' et la paroi 60'.

Particulièrement selon l'invention, l'accessoire de cuisson 1' est réversible et présente en position retournée une zone de cuisson 12' adjacente à une zone de récupération de jus 10'. La zone de cuisson 12' et la zone de récupération de jus 10' sont dépourvues de passage d'écoulement traversant. La zone de récupération de jus 10' retient les jus et permet d'éviter que des jus coulent sur l'élément inférieur 32'. La zone de cuisson 12' est inclinée vers la zone de récupération de jus 10' et est délimitée d'une part par la gorge 11' ménageant la zone de récupération de jus 10' et d'autre part par une paroi 70'. La paroi 70' est agencée dans le prolongement de la paroi 60'. La nervure 4' retournée forme la gorge 11' ménageant la zone de récupération de jus 10'. La paroi 60' forme les extrémités latérales de la gorge 11'.

L'accessoire de cuisson 1' peut être formé par une pièce métallique 20' moulée. La pièce métallique 20' forme le réceptacle de cuisson 2', la zone de cuisson 12' et la zone de récupération de jus 10'. La pièce métallique 20' présente également la zone de passage de vapeur 6' munie des perforations 8'. La pièce métallique 20 est revêtue d'un matériau anti-adhésif.

Le réceptacle de cuisson 2' et la zone de cuisson 12' présentent une forme allongée. L'absence de couronne périphérique facilite le service des aliments.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Accessoire de cuisson (1 ; 1'), notamment destiné à être utilisé dans un dispositif de cuisson à la vapeur (30 ; 30'), ledit accessoire de cuisson (1 ; 1') comprenant un réceptacle de cuisson (2 ; 2') et une zone de passage de vapeur (6 ; 6'), **caractérisé en ce que** l'accessoire de cuisson (1 ; 1') est réversible, et **en ce que** l'accessoire de cuisson (1 ; 1') présente en position retournée une zone de cuisson (12 ; 12') adjacente à une zone de récupération de jus (10 ; 10'), la zone de cuisson (12 ; 12') et la zone de récupération de jus (10 ; 10') étant dépourvues de passage d'écoulement traversant.

2. Accessoire de cuisson (1 ; 1'), selon la revendication 1, **caractérisé en ce qu'**une nervure (4 ; 4') sépare le réceptacle de cuisson (2 ; 2') et la zone de passage de vapeur (6 ; 6').

3. Accessoire de cuisson (1), selon la revendication 2, **caractérisé en ce que** la nervure (4) est annulaire.

4. Accessoire de cuisson (1) selon la revendication 3, **caractérisé en ce que** la nervure annulaire (4) entoure le réceptacle de cuisson (2).

5. Accessoire de cuisson (1 ; 1') selon l'une des revendications 2 à 4, **caractérisé en ce que** la nervure (4 ; 4') retournée forme une gorge (11 ; 11') ménageant la zone de récupération de jus (10 ; 10')

6. Accessoire de cuisson (1 ; 1') selon l'une des revendications précédentes, **caractérisé en ce que** le réceptacle de cuisson (2 ; 2') et la zone de cuisson (12 ; 12') présentent une forme allongée.

7. Accessoire de cuisson (1 ; 1') selon l'une des revendications précédentes, **caractérisé en ce que** la zone de cuisson (12 ; 12') est inclinée vers la zone de récupération de jus (10 ; 10').

8. Accessoire de cuisson (1; 1') selon une des revendications précédentes, **caractérisé en ce qu'**une pièce métallique (20 ; 20') forme le réceptacle de cuisson (2 ; 2'), la zone de cuisson (12 ; 12') et la zone de récupération de jus (10; 10').

9. Accessoire de cuisson (1 ; 1') selon la revendication 8, **caractérisé en ce que** la pièce métallique (20 ; 20') présente la zone de passage de vapeur (6 ; 6').

10. Accessoire de cuisson (1 ; 1') selon une des revendications 8 ou 9, **caractérisé en ce que** la pièce métallique (20 ; 20') est revêtue d'un matériau anti-adhésif.

11. Accessoire de cuisson (1) selon une des revendications 8 à 10, **caractérisé en ce qu'**il comprend une couronne périphérique (14) obtenue par surmoulage de matière plastique sur la pièce métallique (20).

12. Accessoire de cuisson (1) selon l'une des revendications précédentes, **caractérisé en ce qu'**il comprend une couronne périphérique (14).

13. Accessoire de cuisson (1) selon une des revendications 11 ou 12, **caractérisé en ce que** la couronne périphérique (14) porte des organes de préhension (22).

14. Accessoire de cuisson (1) selon une des revendications 11 à 13, **caractérisé en ce que** la couronne périphérique (14) comporte deux bords annulaires (16, 18) symétriques.

15. Dispositif de cuisson à la vapeur (30) comportant un accessoire de cuisson (1) selon l'une des revendications 1 à 14, **caractérisé en ce qu'**il comporte un élément inférieur (32) sur lequel est disposé l'accessoire de cuisson (1) et un élément supérieur (40) disposé sur l'accessoire de cuisson (1), l'élément inférieur (32) comportant un bord annulaire (34) formant une rainure (36) prévue pour recevoir soit l'élément supérieur (40) soit l'accessoire de cuisson (1) dans l'une et l'autre de ses positions.

16. Dispositif de cuisson à la vapeur (30) comportant un accessoire de cuisson (1) selon la revendication 10, **caractérisé en ce qu'**il comporte un élément inférieur (32) sur lequel est disposé l'accessoire de cuisson (1) et un élément supérieur (40) disposé sur l'accessoire de cuisson (1), l'élément inférieur (32) comportant un bord annulaire (34) formant une rainure (36) prévue pour recevoir soit l'élément supérieur (40) soit l'accessoire de cuisson (1) dans l'une et l'autre de ses positions, et **en ce que** les bords annulaires (16, 18) de l'accessoire de cuisson (1) sont prévus pour coopérer avec une surface d'appui annulaire (42) de l'élément supérieur (40) ainsi qu'avec une surface d'appui annulaire (38) de l'élément inférieur (32).

## Claims

1. Cooking accessory (1; 1'), particularly intended for use in a steam cooking device (30; 30'), said cooking accessory (1; 1') comprising a cooking receptacle (2; 2') and a steam passage zone (6; 6'), **characterized in that** the cooking accessory (1; 1') is reversible and **in that** the cooking accessory (1; 1') has, in the inverted position, a cooking zone (12; 12') adjacent to a juice collecting zone (10; 10'), the cooking zone (12; 12') and the juice collecting zone (10'; 10') having no flow-through passages.

2. Cooking accessory (1; 1') according to claim 1, **characterized in that** a rib (4; 4') separates the cooking receptacle (2; 2') and the steam passage zone (6; 6').

3. Cooking accessory (1) according to claim 2, **characterized in that** the rib (4) is annular.

4. Cooking accessory (1) according to claim 3, **characterized in that** the annular rib (4) surrounds the cooking receptacle (3).

5. Cooking accessory (1; 1') according to any one of claims 2 to 4, **characterized in that** the inverted rib (4; 4') forms a groove (11; 11') that creates the juice collecting zone (10; 10').

6. Cooking accessory (1; 1') according to any one of the preceding claims, **characterized in that** the cooking receptacle (2; 2') and the cooking zone (12; 12') have an elongated shape.

7. Cooking accessory (1; 1') according to any one of the preceding claims, **characterized in that** the cooking zone (12, 12') is inclined towards the juice collecting zone (10; 10').

8. Cooking accessory (1; 1') according to any one of the preceding claims, **characterized in that** a metal part (20; 20') forms the cooking receptacle (2; 2'), the cooking zone (13; 12') and the juice collecting zone (90; 10').

9. Cooking accessory (1; 1') according to claim 8, **characterized in that** the metal part (20; 20') includes the steam passage zone (6; 6').

10. Cooking accessory (1; 1') according to either of claims 8 and 9, **characterized in that** the metal part (20; 20') is coated with a non-stick material.

11. Cooking accessory (1) according to any one of claims 8 to 10, **characterized in that** it comprises a peripheral collar (14) obtained by overmolding plastic material onto the metal part (20).

12. Cooking accessory (1) according to any one of the preceding claims, **characterized in that** it comprises a peripheral collar (14).

13. Cooking accessory (1) according to either of claims 11 and 12, **characterized in that** the peripheral collar (14) supports handle elements (22).

14. cooking accessory (1) according to any one of claims 11 to 13, **characterized in that** the peripheral collar (14) has two symmetrical annular edges (16, 18).

15. Steam cooking device (30) comprising a cooking accessory (1) according to any one of claims 1 to 14, **characterized in that** it includes a lower element (32) on which the cooking accessory (1) is disposed and an upper element (40) disposed on the cooking accessory (1), the lower element (32) comprising an annular edge (34) forming a groove (36) provided for receiving either the upper element (40) or the cooking accessory (1) in its respective positions.

16. steam cooking device (30) comprising a cooking accessory (1) according to claim 10, **characterized in that** it includes a lower element (32) on which the cooking accessory (1) is disposed and an upper element (40) disposed on the cooking accessory (1), the lower element (32) comprising an annular edge (34) forming a groove (36) provided for receiving either the upper element (40) or the cooking accessory (1) in its respective positions, and **in that** the annular edges (16, 18) of the cooking accessory (1) are provided for cooperating with both an annular support surface (42) of the upper element (40) and an annular support surface (38) of the lower element (32).

## Patentansprüche

1. Garzubehörteil (1; 1'), das insbesondere dazu bestimmt ist, in einer Dampfkochgerät (30; 30') verwendet zu werden, wobei das Garzubehörteil (1; 1') einen Garbehälter (2; 2') und eine Dampfdurchlasszone (6; 6') enthält, **dadurch gekennzeichnet, dass** das Garzubehörteil (1; 1') umwendbar ist, und dass das Garzubehörteil (1; 1') in der umgedrehten Stellung eine an eine Staftauffangzone (10; 10') angrenzende Garzone (12; 12') aufweist, wobei die Garzone (12; 12') und die Saftauffangzone (10; 10') keinen Abflussdurchlass haben.

2. Garzubehörteil (1; 1') nach Anspruch 1, **dadurch gekennzeichnet, dass** eine Rippe (4; 4') den Garbehälter (2; 2') und die Dampfdurchlasszone (6; 6') trennt.

3. Garzubehörteil (1) nach Anspruch 2, **dadurch gekennzeichnet, dass** die Rippe (4) ringförmig ist.

4. Garzubehörteil (1) nach Anspruch 3, **dadurch gekennzeichnet, dass** die ringförmige Rippe (4) den Garbehälter (2) umgibt.

5. Garzubehörteil (1; 1') nach einem der Ansprüche 2 bis 4, **dadurch gekennzeichnet, dass** die umgedrehte Rippe (4; 4') eine Kehle (11; 11') bildet, in der die Saftauffangzone (10; 10') angeordnet ist.

6. Garzubehörteil (1; 1') nach einem der vorhergehenden Ansprüche, **dadurch gekennzeichnet, dass** der Garbehälter (2; 2') und die Garzone (12; 12') eine länglich Form haben.

7. Garzubehörteil (1; 1') nach einem der vorhergehenden Anspruche, **dadurch** gekenntzeichnet, dass die Garzone (12; 12') zur Saftauffangzone (10: 10') hin geneigt ist.

8. Garzubehörteil (1; 1') nach einem der vorhergehenden Ansprüche, **dadurch gekennzeichnet, dass** ein metallisches Bauteil (20; 20') den Gärbehälter (2; 2'), die Garzone (12; 12') und die Saftauffangzone (10; 10') bildet.

9. Garzubehörteil (1; 1') nach Anspruch 8, **dadurch gekennzeichnet, dass** das metallische Bauteil (20; 20') die Dampfdurchlasszone (6; 6') aufweist.

10. Garzubehörteil (1; 1') nach einem der Ansprüche 8 oder 9, **dadurch gekennzeichnet, dass** das metallische Bauteil (20; 20') mit einem Antihaft Material beschichtet ist.

11. Garzubehörteil (1) nach einem der Ansprüche 8 bis 10, **dadurch gekennzeichnet, dass** es einen Mantelring (14) aufweist, der durch Aufformen von Kunststoff auf das metallische Bauteil (20) erhalten wird.

12. Garzubehörteil (1) nach einem der vorhergehenden Ansprüche, **dadurch gekennzeichnet, dass** es einen Mantelring (14) aufweist.

13. Garzubehörteil (1) nach einem der Ansprüche 11 oder 12, **dadurch gekennzeichnet, dass** der Mantelring (14) Greiforgane (22) trägt.

14. Garzubehörteil (1) nach einem der Ansprüche 11 bis 13, **dadurch gekennzeichnet, dass** der Mantelring (14) zwei symmetrische ringförmige Ränder (16, 18) aufweist.

15. Dampfkochgerät (30), die ein Garzubehörteil (1) nach einem der Ansprüche 1 bis 14 aufweist, **dadurch gekennzeichnet, dass** sie ein unteres Element (32), auf dem das Garzubehörteil (1) angeordnet ist, und ein oberes Element (40) aufweist, das auf dem Garzubehörteil (1) angeordnet ist, wobei das untere Element (32) einen ringförmigen Rand (34) aufweist, der eine Bille (36) bildet, die vorgesehen ist, um entweder das obere Element (40) oder das Garzubehörteil (1) in der einen oder anderen seiner Stellungen aufzunehmen.

16. Dampfkochgerät (30), die ein Garzubehörteil (1) nach Anspruch 10 aufweist, **dadurch gekennzeichnet, dass** sie ein unteres Element (32), auf dem das Garzubehörteil (1) angeordnet ist, und ein oberes Element (40) aufweist, das auf dem Garzubehörteil (1) angeordnet ist, wobei das untere Element (32) einen ringförmigen Rand (34) aufweist, der eine Rille (36) bildet, die vorgesehen ist, um entweder das obere Element (40) oder das Garzubehörteil (1) in der einen oder anderen seiner Stellungen aufzunehmen, und dass die ringförmigen Ränder (16, 18) des Garzubehörteils (1) vorgesehen sind, um mit einer ringförmigen Auflagezone (42) des oberen Elements (40) sowie mit einer ringförmigen Auflagezone (38) des unteren Elements (32) zusammenzuwirken.
